# NEW EUROPEAN PATENT SPECIFICATION

(11) **EP 1 942 045 B2**
(45) Date of publication and mention of the opposition decision: **21.12.2022**
(45) Mention of the grant of the patent: 23.12.2009
(21) Application number: 07101896.4
(22) Date of filing: 07.02.2007
(51) Int. Cl.: B62D 25/06, B62D 25/04, B62D 29/00

(54) **Method for manufacturing a pillar for a vehicle**
Herstellungsverfahren für eine Fahrzeugsäule
Procédé de fabrication d'un pilier pour un véhicule

(30) Priority: 05.01.2007 EP 07000176
(43) Date of publication of application: 09.07.2008
(73) Proprietor: Ford Global Technologies, LLC, Dearborn, MI 48126 (US)
(72) Inventor: Andersson, Karin, Ventura, 93001 (US); Nyberg, Björn, 427 50, Billdal (SE); Lindqvist, Clas, 423 38, Torslanda (SE); Krezesiwo, David, 413 23, Göteborg (SE); Nilsson, Andreas, Canton, MI 48188 (US); Hallgren, Stefan, 433 75, Jonsered (SE); Polverini, Ettore, 414 72, Göteborg (SE)
(74) Representative: Valea AB

(56) References cited:
- WO-A-01/58741
- WO-A-02/26550
- DE-A1- 10 048 233
- US-A1- 2004 217 626
- US-A1- 2005 218 697

## Description

### TECHNICAL FIELD

The present invention concerns a method for manufacturing a pillar for a vehicle, i.e. a shaft of load-bearing material, such as an A-pillar, B-pillar, C-pillar etc. The present invention also concerns a vehicle comprising such a pillar.

### BACKGROUND OF THE INVENTION

The passenger compartment of a vehicle requires high rigidity to protect the users of the vehicle from being injured in case of crash situations like rollover, i.e. an accident in which the vehicle overturns. In the event of a rollover accident, rollover forces are typically directed at the front corner of the roof of a vehicle in the case of a hardtop vehicle, such as a sedan, or at the upper end of an A-pillar in the case of an open-top vehicle, such as a cabriolet. The upper end of the A-pillar will therefore be subjected to high bending moments. A-pillars are generally designed to be of a hollow, closed cross section so as to limit their weight and consequently to make the vehicle in which they are mounted more lightweight and thus more fuel-efficient. In order to increase the rigidity of such A-pillars, their cross sectional area may be enlarged in the region where the highest bending moments occur.

Increasing the cross sectional area of at least part of an A-pillar is however disadvantageous in that it may increase the cost, weight and complexity of the A-pillar. Furthermore, a vehicle user's field of vision becomes more narrow as the cross sectional area of the A-pillar becomes larger. A wide A-pillar also causes blind spots in a vehicle driver's field of view and thereby decreases the safety of that vehicle's users and the safety of other road users.

When manufacturing A-pillars, resistance welding methods, such as spot welding, are typically used to connect the constituent parts of the A-pillar together, as described in US patent no. 5 941 597. In spot welding two shaped copper alloy electrodes are used to concentrate welding current and force between the materials to be welded. The result is a "spot" that is quickly heated to the melting point of the material forming the spot, thus forming a region of welded metal after the current is removed. A disadvantage with resistance welding methods is that relatively large weld beads are formed, which usually have to be provided with a finish or have to be re-worked, which increases manufacturing time, complexity and costs. Furthermore, since access for resistance welding tools is required from both sides of the materials to be welded, a lot of joint configurations are very difficult, if not impossible to obtain, thus restricting joint design possibilities.

WO 02/26550 which document is taken as basis for the preamble of independent claim 1, concerns an automotive pillar reinforcement system having a skeleton member designed to be secured to a vehicle pillar, such as an automotive "B" pillar. An expandable material, such as an epoxy-based reinforcing material, is disposed on the skeleton member. In one application, the system is utilized to reinforce structural portions of an automotive vehicle, such as a pillar structure found in a vehicle, wherein the material expands and cures during an automobile assembly operation, bonding the reinforcement system to the pillar structure and the vehicle panels.

WO 01/58741 discloses an automotive vehicle frame reinforcement system has a skeleton member designed to be placed in a cavity defined in a vehicle frame, such as a roof or pillar section. An expandable material such as an epoxy-based reinforcing foam, is disposed on the skeleton member. Once the system is attached to the frame, the foam expands and cures during an automobile assembly operation, bonding the reinforcement system to the frame. As a result, the reinforcement system provides enhanced load distribution over the vehicle frame without adding excessive weight.

### SUMMARY OF THE INVENTION

An object of the present invention is to provide a method for manufacturing a vehicle pillar that has desirable characteristics in crash situations like impact or rollover, whilst providing for the possibility of improved driver visibility.

This object is achieved by a method according to claim 1 whereby the pillar comprises a substantially hollow body, such as a straight or curved pipe, of any substantially open or closed, uniform or non-uniform cross section, such as a circular or polygonal cross section, and whereby the substantially hollow body is constituted by at least one member. The method comprises the steps of manufacturing said at least one member from high strength steel, providing said at least one member with a planar bonding surface or flange that is up to 15 mm wide, and connecting said bonding surface or flange to another part of the pillar or to part of a vehicle body, by means of continuous bonding such as laser beam welding or adhesion, whereby the high strength steel is an ultra-high strength steel (UHSS) having a tensile strength of at least 1000 MPa (when using UHSS alloyed with boron (boron steel) whereby the strength is measured in the steel's hardened state). UHSS alloyed with boron, or an extra high strength steel (EHSS) having a tensile strength of at least 700 MPa.

Laser beam welding provides many advantages over conventional resistance welding methods such as spot welding. In laser beam welding two or more pieces of material are joined together using a monochromatic coherent laser beam having low beam divergence and high energy content. The laser beam makes a 'keyhole' and the liquid metal solidifies behind the traversing beam, leaving a very narrow weld and heat affected zone (HAZ). The weld is approximately 1 mm wide and the surrounding material is not distorted. Since the weld bead is small, there is usually no need for finishing or re-working and this consequently reduces manufacturing time, complexity and costs. Furthermore, since access for laser beam welding tools is usually required from one side only (as is the case when adhering two material together), many different joint configurations are possible (including joint configurations that were previously unavailable when using conventional resistance welding methods such as spot welding), thus allowing for innovative joint designs.

According to an embodiment of the invention the method comprises the step of manufacturing said at least one member using a hot or cold forming technique, such as stamping or roll forming. Hot forming (or hot rolling) techniques involve all processes that use a high temperature to lower a metal's resistance to shape change, such as roll forming and stamping (i.e. a temperature above a metal's re-crystallization temperature as opposed to cold forming/rolling which takes place below this temperature). Roll forming is a continuous bending operation in which sheet or strip metal is gradually formed in tandem sets of rollers until the desired cross-sectional configuration is obtained. Stamping (using a mechanical or hydraulic press), which is associated with blanking, piercing, forming and drawing operations, is the procedure of impressing three dimensional designs or surface definitions through pressurized tools such as presses or dies. Hot forming techniques allow for the production of large quantities of vehicle pillars of long lengths, which have complex profiles and small cross sectional areas.

According to an embodiment of the invention the bonding surface or flange that is 6-15 mm wide, preferably 4-10 mm wide, whereby the width of the planar bonding surface should be just wide enough to accommodate the object that is to be bonded to, or mounted on the bonding surface.

According to an embodiment of the invention the substantially hollow body of the pillar is constituted by two members, namely an inner member and an outer member, when the pillar is mounted in a vehicle, whereby both the inner and the outer member are manufactured from high strength steel, such as UHSS, using a hot or cold forming technique for example.

Manufacturing at least part of a pillar from high strength steel increases the part's material strength and reduces the amount of material needed, which decreases its weight and consequently makes the vehicle in which the pillar is mounted more lightweight and thus more fuel efficient.

All of these aforementioned advantages are achieved without having to increase the cross sectional area of the pillar and could even decrease the total cross sectional area. A strong, structurally rigid pillar may therefore be manufactured to provide the occupants of a vehicle with a higher degree of protection from being injured when the vehicle is subjected to a crash situation without detriment to a vehicle user's field of view.

According to an embodiment of the invention the pillar constitutes the A-pillar, B-pillar, C-pillar etc. whereby an A-pillar is the shaft of material that supports the windscreen on either of the windscreen frame sides of a vehicle; each successive substantially vertically extending support being denoted by a successive letter in the alphabet (B-pillar, C-pillar etc.).

According to a further embodiment of the invention the pillar has an upper and a lower half when mounted (vertically or non-vertically) in a vehicle, whereby the at least one of the at least one member is located in the upper half of the A-pillar.

According to an embodiment of the invention the method comprises the step of providing the pillar with a bonding surface or flange for mounting a windscreen thereon. The flange width may be minimized by using laser beam welding or adhesion. Said bonding surface or flange provided on the inventive pillar may therefore be arranged to be much smaller than a flange provided on a conventional pillar (i.e. the inventive bonding surface is approximately 6-7 mm wide instead of the conventional 15-16 mm, which is required for spot welding).

According to another embodiment of the invention, the method comprises the step of ensuring that the angle of binocular obstruction of the pillar (as defined in the Council Directive of 17th May 1988 on the approximation of the laws of Member States relating to the field of vision of motor vehicle drivers (88/366/EEC)) is less than 10° and preferably less than 6°.

According to an embodiment of the invention the method comprises the step of providing the substantially hollow body of the pillar with at least one part having a profile with a first maximum transverse extension in the direction of a driver's line of sight when the pillar is mounted in the vehicle and a driver is seated in the driver's seat of the vehicle and is looking at the pillar, and a second maximum transverse extension in a direction perpendicular to the vehicle driver's line of sight, whereby the ratio of the magnitude of the first maximum transverse extension to the magnitude of the second maximum transverse extension of the pillar is greater than 1.6:1, preferably greater than 2:1.

According to another embodiment of the invention the magnitude of the first maximum extension is 100-180 mm.

According to a further embodiment of the invention the ratio of the magnitude of the first maximum transverse extension to the magnitude of the second maximum extension of the A-pillar on the side of the vehicle nearest to the driver's seat of is greater than the ratio of the magnitude of the first maximum transverse extension to the magnitude of the second maximum extension of the A-pillar on the side of the vehicle furthest from the driver's seat.

The present invention also concerns a pillar that is the product of a method according to any of the embodiments of the invention and a vehicle comprising a pillar manufactured using a method according to any of the embodiments of the invention.

### BRIEF DESCRIPTION OF THE DRAWINGS

The present invention will hereinafter be further explained by means of non-limiting examples with reference to the appended figures where;
Figure 1 : shows a convertible vehicle having a conventional A-pillar,
Figure 2 : schematically shows an A-pillar having a substantially hollow body constituted by three parts according to an embodiment of the invention,
Figure 3 : schematically shows an A-pillar having a substantially hollow body constituted by two parts according to another embodiment of the invention, and
Figure 4 : shows two A-pillars in profile in relation to a vehicle driver's position, viewed from above.

It should be noted that the drawings have not been drawn to scale and that the dimensions of certain features have been exaggerated for the sake of clarity.

### DETAILED DESCRIPTION OF EMBODIMENTS

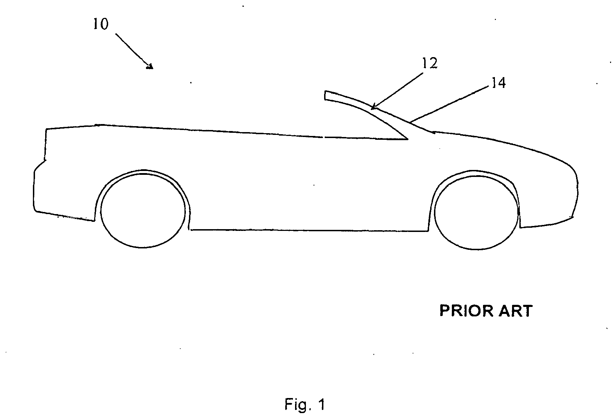

Figure 1 shows a passenger car 10, namely a convertible coupe having a top that may be lowered or removed, comprising a conventional A-pillar 12 that supports the windscreen 14. The present invention is however also applicable to a sedan, estate or any other vehicle type having a permanent top.

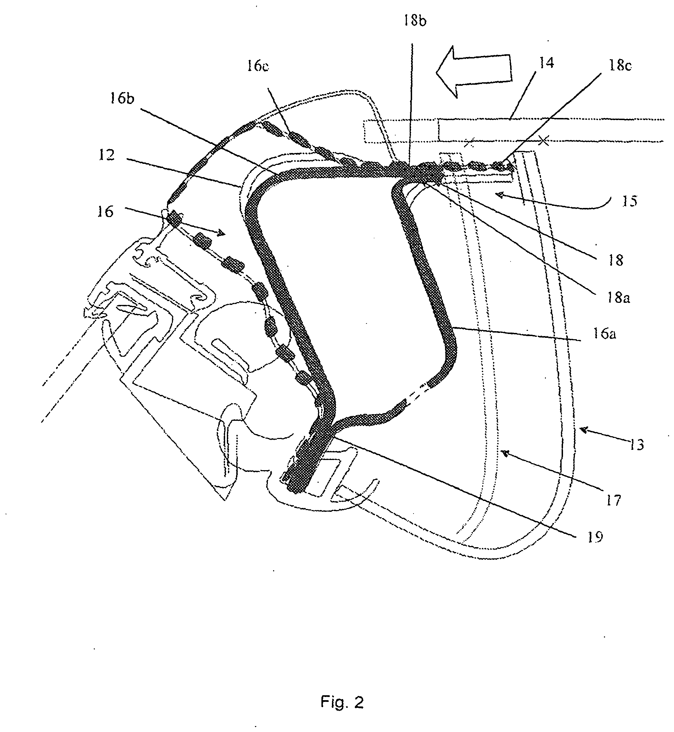

Figure 2 shows an inventive A-pillar 16 in cross-section. The A-pillar 16 comprises a substantially hollow body constituted by two members (represented by a thick black line), namely an inner member, side inner panel 16a and an outer member, side outer panel 16b, and an outermost member 16c (represented by a thick, dashed black line) that provides rain protection and improved aesthetic appearance. The side inner panel 16a and/or side outer panel 16b of the substantially hollow body may comprise at least one opening, to facilitate gripping/holding of the substantially hollow body during mounting for example, or the A-pillar may have an open cross section.

Both the side inner panel 16a and the side outer panel 16b are manufactured from an ultra-high strength steel (UHSS), preferably using a hot forming technique, and comprise planar bonding surfaces 18a and 18b respectively which extend 4-10mm, in a direction that is rectilinear with the longitudinal extension of the windscreen 14. The outermost member 16c of the A-pillar comprises a flange 18c that extends up to 15 mm, which is arranged to be located adjacent to the bonding surfaces 18a and 18b of the side inner panel 16a and the side outer panel 16b and enables a windscreen 14 to be bonded to the flange 18c. The bonding surfaces 18a, 18b and the flange 18c are bonded together. At point 18 by laser welding or adhesion.

The A-pillar 16 shown in figure 2 may of course comprise just one member, i.e. the side inner panel 16a or the side outer panel 16b, comprising a high strength steel whereby the other member (16b or 16a respectively) is manufactured from a material of lower tensile strength. A side inner panel 16a may be manufactured from high strength steel if it is desired to minimise the width of the A-pillar, whereas a side outer panel 16b may be manufactured from high strength steel if it is desired to maximise the strength of the A-pillar in crash situations like impact or rollover. By using laser beam welding or adhesion to connect a thicker or higher strength member to a member made of thinner gauge steel, iron-zinc coated steel or another metal or material for example, a lighter structure (with higher strength areas only where required) can be produced. This negates additional stamping and forming to make reinforcement parts.

According to an embodiment of the invention a pillar according to the present invention has a length of 1.3-2.0 m, a minimum diameter of 30-40 mm. It may be constituted of material having a thickness of up to 3.0 mm, preferably up to 2.0 mm.

The side inner panel 16a and side outer panel 16b shown in figure 2 have also been provided with a second bonding surface or flange 19 for mounting the said members 16a and 16b to the body of a vehicle by means of a resistance welding method, such as spot welding, or a continuous bonding method, such as laser welding or adhesion. An inventive A-pillar may be mounted directly on the body of a vehicle or indirectly via connection plates mounted on the A-pillar.

Figure 2 also shows a conventional A-pillar 12 (whose profile partly overlaps the profile of the inventive A-pillar 16). The conventional A-pillar 12 comprises a much wider flange 15 (up to approximately 26mm) since such a flange width is necessary when connecting components using conventional resistance welding methods such as spot welding, which consequently makes the whole A-pillar wider. The arrow in figure 2 indicates that the interior trim 17 of a vehicle comprising a narrow inventive A-pillar 16 obstructs much less of a vehicle user's vision as compared to the interior trim 13 of a vehicle comprising a wider conventional A-pillar 12. Furthermore, hot forming techniques allow for the production of a side inner panel 16a having a much smaller radius of curvature in the vicinity of the flange 18a since access for laser beam welding tools or a glue gun is required from one side only. Many different joint configurations are therefore possible. The inventive A-pillar 16, while maintaining desirable characteristics in crash situations like impact or rollover, is much narrower than the conventional A-pillar 12 since it has been manufactured using the inventive method. It consequently obstructs much less of a vehicle driver's vision. Furthermore, the extended windscreen 14 that can be fitted in vehicles comprising the inventive A-pillar 16 improves the aesthetic appearance of the vehicle.

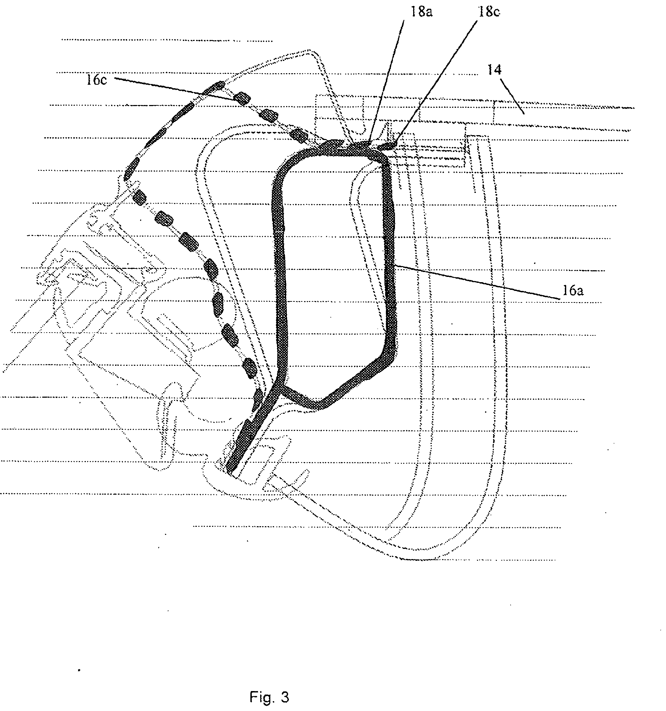

Figure 3 shows an A-pillar 16 constituted by an inner hollow roll-formed reinforcement member 16a (represented by a thick black line) manufactured in a single piece from high strength steel, such as UHSS alloyed with boron, an outer member 16c manufactured from a material having a lower yield strength (represented by a thick dashed black line). The inner member 16a and the outer member 16 c are provided with bonding surfaces or flanges 18a and 18c respectively and said members 16a and 16c are connected together by means of continuous bonding such as laser beam welding or adhesion. The bonding surface or flange 18c of the outer member 16c is arranged to be just wide enough to support the edge of a windscreen 14 thereon.

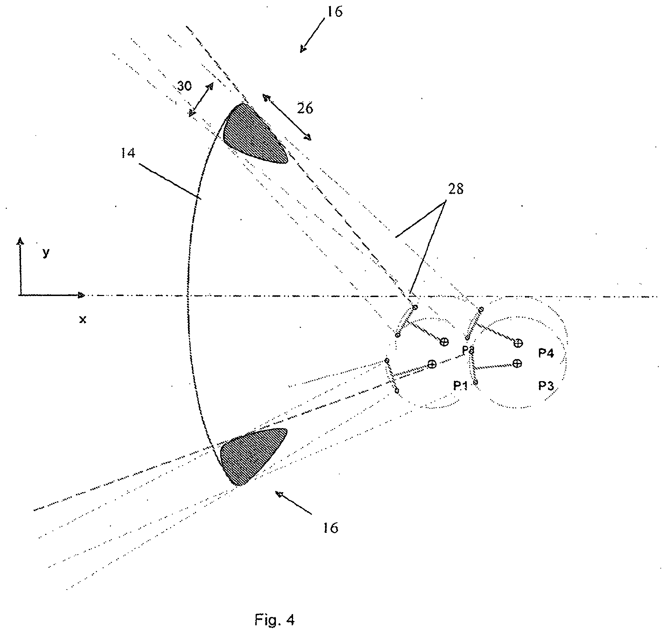

Figure 4 shows the profile of two A-pillars 16 that are mounted in a vehicle and which support a windscreen 14, viewed from above. The A-pillar 16 has a first maximum transverse extension 26 in the direction of a driver's line of sight 28 when the driver is sitting in the driver's seat of the vehicle and is looking at the pillar. P1-P4 indicate various positions of a vehicle driver's two eyes, P4 being the position of the driver's two eyes when he/she is looking in the direction of one of the A-pillars 16. The A-pillar 16 has a second maximum transverse extension 30 in a direction perpendicular to the vehicle driver's line of sight 28, whereby the ratio of the magnitude of the first maximum transverse extension to the magnitude of the second maximum transverse extension of the pillar is greater than or equal to 1.6:1, preferably greater than or equal to 2:1.

In figure 4 both of the load-bearing shafts of the A-pillar 16 are of the same profile and dimensions. However, according to an embodiment of the invention the ratio of the magnitude of the first maximum transverse extension 26 to the magnitude of the second maximum transverse extension 30 of the pillar 16 on the side of the vehicle nearest to the driver's seat is greater than the ratio of the magnitude of the first maximum transverse extension 26 to the magnitude of the second maximum extension 30 of the pillar 16 on the side of the vehicle furthest from the driver's seat. Since the A-pillar nearest to the driver's seat obscures the driver's vision more than the A-pillar furthest from the driver's seat, making the A-pillar that is nearest to the driver's seat thinner than the A-pillar that is furthest from the driver's seat will further improve the driver's vision.

Further modifications of the invention within the scope of the claims would be apparent to a skilled person.

## Claims

1. Method for manufacturing a pillar (16) for a vehicle (10), whereby the pillar (16) comprises a substantially hollow body of any substantially open or closed, uniform or non-uniform cross section, constituted by at least one member (16a, 16b), **characterized in that** it comprises the steps of manufacturing said at least one member (16a, 16b) from high strength steel, providing said at least one member (16a, 16b) with a planar bonding surface (18) that is up to 15 mm wide, and connecting said bonding surface (18) to another part of the pillar or to part of a vehicle body by means of continuous bonding such as laser beam welding or adhesion, whereby said high strength steel is an ultra-high strength steel (UHSS) having a tensile strength of at least 1000 MPa (when using UHSS alloyed with boron (boron steel) whereby the strength is measured in the steel's hardened state), UHSS alloyed with boron, or an extra high strength steel (EHSS) having a tensile strength of at least 700 MPa.

2. Method according to claim 1, **characterized in that** it comprises the step of manufacturing said at least one member (16a, 16b,) using a hot or cold forming technique, such as stamping or roll forming.

3. Method according to claim 1 or 2, **characterized in that** said bonding surface (18) that is 6-15 mm wide, preferably 4-10 mm wide.

4. Method according to any of the preceding claims, **characterized in that** said substantially hollow body is constituted by two members, namely an inner member (16a) and an outer member (16b), when the pillar is mounted in a vehicle (10), whereby both the inner (16a) and the outer member (16b) are manufactured from high strength steel.

5. Method according to any of the preceding claims, **characterized in that** said pillar (16) constitutes the A-pillar, B-pillar, C-pillar etc. of a vehicle (10).

6. Method according to any of the preceding claims, **characterized in that** said pillar has an upper and a lower half when mounted in a vehicle (10), whereby said at least one member is located in the upper half of the pillar.

7. Method according to any of the preceding claims, **characterized in that** it comprises the step of providing said substantially hollow body with a bonding surface (18) for mounting a windscreen (14) thereon.

8. Method according to any of the preceding claims, **characterized in that** it comprises the step of ensuring that the angle of binocular obstruction of the pillar (16) when mounted in a vehicle is less than 10° and preferably less than 6°.

9. Method according to any of the preceding claims, **characterized in that** it comprises the step of providing at least part of the substantially hollow body with a profile having a first maximum transverse extension in the direction of a driver's line of sight when the pillar (16) is mounted in the vehicle (10) and a driver is seated in the driver's seat of the vehicle and is looking at the pillar (16), and a second maximum transverse extension in a direction perpendicular to said vehicle driver's line of sight, whereby the ratio of the magnitude of said first maximum transverse extension to the magnitude of said second maximum transverse extension of the pillar (16) is greater than or equal to 1.6:1, preferably greater than or equal to 2:1.

10. Method according to claim 9, **characterized in that** the magnitude of the first maximum transverse extension is 100-180 mm.

11. Method according to claim 9 or 10, **characterized in that** it comprises the step of ensuring that the ratio of the magnitude of said first maximum transverse extension to the magnitude of said second maximum transverse extension of the pillar on the side of the vehicle nearest to the driver's seat is greater than the ratio of the magnitude of said first maximum transverse extension to the magnitude of said second maximum extension of the pillar (16) on the side of the vehicle furthest from the driver's seat.

12. Vehicle, **characterized in that** it comprises a pillar (16) manufactured using a method according to any of the preceding claims.

## Patentansprüche

1. Herstellungsverfahren für eine Säule (16) für ein Fahrzeug (10), wobei die Säule (16) einen im Wesentlichen hohlen Körper von jedem beliebigen im Wesentlichen offenen oder geschlossenen Querschnitt, egal, ob dieser gleichmäßig oder ungleichmäßig ist, umfasst, der aus wenigstens einem Bauteil (16a, 16b) besteht, **dadurch gekennzeichnet, dass** es folgende Schritte umfasst: Herstellen des wenigstens einen Bauteils (16a, 16b) aus hochfestem Stahl, Versehen des wenigstens einen Bauteils (16a, 16b) mit einer ebenen Verbindungsfläche (18), die bis zu 15 mm breit ist, und Verbinden der Verbindungsfläche (18) mit einem anderen Teil der Säule oder mit einem Teil einer Fahrzeugkarosserie mittels eines kontinuierlichen Verbindungsverfahrens, etwa Laserstrahlschweißen oder Kleben, wobei der hochfeste Stahl ein höchstfester Stahl (UHSS), der eine Zugfestigkeit von wenigstens 1000 MPa aufweist (wenn UHSS verwendet wird, der mit Bor legiert ist (Borstahl), wobei die Festigkeit in gehärtetem Zustand des Stahls gemessen wird), mit Bor legierter UHSS oder ein besonders hochfester Stahl (EHSS) mit einer Zugfestigkeit von wenigstens 700 MPa ist.

2. Verfahren nach Anspruch 1, **dadurch gekennzeichnet, dass** es den Schritt des Herstellens des wenigstens einen Bauteils (16a, 16b) durch Verwendung eines Warm- oder Kaltumformverfahrens, etwa Stanzen oder Rollformen, umfasst.

3. Verfahren nach einem der Ansprüche 1 oder 2, **dadurch gekennzeichnet, dass** die Verbindungsfläche (18) 6 bis 15 mm breit ist, vorzugsweise 4 bis 10 mm breit ist.

4. Verfahren nach einem der vorhergehenden Ansprüche, **dadurch gekennzeichnet, dass** der im Wesentlichen hohle Körper aus zwei Bauteilen besteht, nämlich einem inneren Bauteil (16a) und einem äußeren Bauteil (16b), wenn die Säule in einem Fahrzeug (10) montiert ist, wobei sowohl das innere Bauteil (16a) als auch das äußere Bauteil (16b) aus hochfestem Stahl hergestellt sind.

5. Verfahren nach einem der vorhergehenden Ansprüche, **dadurch gekennzeichnet, dass** die Säule (16) die A-Säule, B-Säule, C-Säule usw. eines Fahrzeugs (10) bildet.

6. Verfahren nach einem der vorhergehenden Ansprüche, **dadurch gekennzeichnet, dass** die Säule eine obere und eine unter Hälfte aufweist, wenn sie in einem Fahrzeug (10) montiert ist, wobei sich das wenigstens eine Bauteil in der oberen Hälfte der Säule befindet.

7. Verfahren nach einem der vorhergehenden Ansprüche, **dadurch gekennzeichnet, dass** es den Schritt umfasst, den im Wesentlichen hohlen Körper mit einer Verbindungsfläche (18) zum Montieren einer Windschutzscheibe (14) darauf zu versehen.

8. Verfahren nach einem der vorhergehenden Ansprüche, **dadurch gekennzeichnet, dass** es den Schritt umfasst, sicherzustellen, dass der binokulare Verdeckungswinkel der Säule (16), wenn sie in einem Fahrzeug montiert ist, geringer als 10° und vorzugsweise geringer als 6° ist.

9. Verfahren nach einem der vorhergehenden Ansprüche, **dadurch gekennzeichnet, dass** es den Schritt umfasst, wenigstens einen Teil des im Wesentlichen hohlen Körpers mit einem Profil zu versehen, das eine erste maximale Quererstreckung in Richtung der Blickrichtung eines Fahrers aufweist, wenn die Säule (16) in dem Fahrzeug (10) montiert ist und ein Fahrer in dem Fahrersitz des Fahrzeugs sitzt und auf die Säule (16) blickt, und eine zweite maximale Quererstreckung aufweist, die in einer Richtung senkrecht zu der Blickrichtung des Fahrzeugführers ist, wobei das Verhältnis der Größenordnung der ersten maximalen Quererstreckung zur Größenordnung der zweiten maximalen Quererstreckung der Säule (16) größer oder gleich 1,6:1 ist, vorzugsweise größer oder gleich 2:1.

10. Verfahren nach Anspruch 9, **dadurch gekennzeichnet, dass** die Größenordnung der ersten maximalen Quererstreckung 100-180 mm beträgt.

11. Verfahren nach Anspruch 9 oder 10, **dadurch gekennzeichnet, dass** es den Schritt umfasst, sicherzustellen, dass das Verhältnis der Größenordnung der ersten maximalen Quererstreckung zur Größenordnung der zweiten maximalen Quererstreckung der Säule auf der dem Fahrersitz nächstgelegenen Seite des Fahrzeugs größer ist als das Verhältnis der Größenordnung der ersten maximalen Quererstreckung zur Größenordnung der zweiten maximalen Quererstreckung der Säule (16) auf der vom Fahrersitz am entferntesten gelegenen Seite des Fahrzeugs.

12. Fahrzeug, **dadurch gekennzeichnet, dass** es eine Säule (16) umfasst, die nach einem Verfahren gemäß einem der vorhergehenden Ansprüche hergestellt wurde.

## Revendications

1. Procédé de fabrication d'un pied (16) pour un véhicule (10), le pied (16) comprenant un corps essentiellement creux d'une quelconque section transversale essentiellement ouverte ou fermée, uniforme ou non uniforme, constitué d'au moins un élément (16a, 16b), ***caractérisé en ce qu*'**il comprend les étapes consistant à fabriquer ledit au moins un élément (16a, 16b) en acier à haute résistance, munir ledit au moins un élément (16a, 16b) d'au moins une surface de liaison plane (18) d'une largeur allant jusqu'à 15 mm, et relier ladite surface de liaison (18) à une autre partie du pied ou à une partie d'une carrosserie de véhicule au moyen d'une liaison continue, telle qu'une adhérence ou soudage par faisceau laser, ledit acier à haute résistance étant un acier à ultra haute résistance (UHSS) ayant une résistance à la traction d'au moins 1 000 MPa (lorsqu'on utilise de l'UHSS allié à du bore (acier au bore), la résistance étant mesurée dans l'état durci de l'acier), de l'UHSS allié à du bore, un acier à extra haute résistance (EHSS) ayant une résistance à la traction d'au moins 700 MPa.

2. Procédé selon la revendication 1, ***caractérisé en ce qu*'**il comprend l'étape consistant à fabriquer ledit au moins un élément (16a, 16b) en utilisant une technique de formage à chaud ou à froid, telle qu'un emboutissage ou un formage par laminage.

3. Procédé selon la revendication 1 ou 2, ***caractérisé en ce que*** ladite surface de liaison (18) possède une largeur de 6 à 15 mm, préférablement une largeur de 4 à 10 mm.

4. Procédé selon l'une quelconque des revendications précédentes, ***caractérisé en ce que*** ledit corps essentiellement creux est constitué de deux éléments, à savoir un élément intérieur (16a) et un élément extérieur (16b), lorsque le pied est monté dans un véhicule (10), moyennant quoi à la fois l'élément intérieur (16a) et l'élément extérieur (16b) étant fabriqués en acier à haute résistance.

5. Procédé selon l'une quelconque des revendications précédentes, ***caractérisé en ce que*** ledit pied (16) constitue le pied A, le pied B, le pied C etc. d'un véhicule (10).

6. Procédé selon l'une quelconque des revendications précédentes, ***caractérisé en ce que*** ledit pied possède une moitié supérieure et une moitié inférieure lorsqu'il est monté dans un véhicule (10), ledit au moins un élément étant situé dans la moitié supérieure du pied.

7. Procédé selon l'une quelconque des revendications précédentes, ***caractérisé en ce qu***'il comprend l'étape consistant à munir ledit corps essentiellement creux d'une surface de liaison (18) pour y monter un pare-brise (14) .

8. Procédé selon l'une quelconque des revendications précédentes, ***caractérisé en ce qu'***il comprend l'étape consistant à garantir que l'angle d'obstruction binoculaire du pied (16) lorsqu'il est monté dans un véhicule soit inférieur à 10° et préférablement inférieur à 6°.

9. Procédé selon l'une quelconque des revendications précédentes, ***caractérisé en ce qu*'**il comprend l'étape consistant à munir au moins une partie du corps essentiellement creux d'un profil ayant une première extension transversale maximale dans la direction de la ligne visuelle d'un conducteur lorsque le pied (16) est monté dans le véhicule (10) et qu'un conducteur est assis dans le siège conducteur du véhicule et regarde le pied (16), et une deuxième extension transversale maximale dans une direction perpendiculaire à ladite ligne visuelle du conducteur du véhicule, le rapport de la grandeur de ladite première extension transversale maximale sur la grandeur de ladite deuxième extension transversale maximale du pied (16) étant supérieur ou égal à 1,6 : 1, préférablement supérieur ou égal à 2 : 1.

10. Procédé selon la revendication 9, ***caractérisé en ce que*** la grandeur de la première extension transversale est de 100 à 180 mm.

11. Procédé selon la revendication 9 ou 10, ***caractérisé en ce qu*'**il comprend l'étape consistant à garantir que le rapport de la grandeur de ladite première extension transversale maximale sur la grandeur de ladite deuxième extension transversale maximale du pied sur le côté du véhicule le plus proche du siège conducteur est supérieur au rapport de la grandeur de ladite première extension transversale maximale sur la grandeur de ladite deuxième extension transversale maximale du pied (16) sur le côté du véhicule le plus éloigné du siège conducteur.

12. Véhicule ***caractérisé en ce qu*'**il comprend un pied (16) fabriqué en utilisant un procédé selon l'une quelconque des revendications précédentes.
